(19) **Europäisches Patentamt**

**European Patent Office**

**Office européen des brevets**

(11) **EP 1 405 752 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(51) Int Cl.:
*B60K 31/00* (2006.01)  *B60T 7/22* (2006.01)
*B60T 17/22* (2006.01)

(21) Anmeldenummer: **03011895.4**

(22) Anmeldetag: **27.05.2003**

(54) **Einrichtung zur Erzeugung von Stellsignalen in einem Kraftfahrzeug**

Device for producing actuator signals in a motor vehicle

Dispositif à la production des signaux d'actuation dans un véhicule motorisé

(84) Benannte Vertragsstaaten:
**DE FR IT**

(30) Priorität: **01.10.2002 DE 10245800**

(43) Veröffentlichungstag der Anmeldung:
**07.04.2004 Patentblatt 2004/15**

(73) Patentinhaber: **ROBERT BOSCH GMBH**
**70442 Stuttgart (DE)**

(72) Erfinder: **Winner, Hermann**
**76467 Bietigheim (DE)**

(56) Entgegenhaltungen:
**DE-A- 10 026 586      DE-A- 19 832 800**
**DE-A- 19 856 823      DE-A- 19 857 992**
**US-A- 4 773 072      US-A- 5 418 727**
**US-A- 5 485 379**

**Beschreibung**

Stand der Technik

Die vorliegende Erfindung betrifft eine Einrichtung zur Erzeugung von Stellsignalen in einem Kraftfahrzeug, nach Gattung des Anspruchs 1, sowie ein zughöriges Verfahren nach Gattung des unabhänigen Verfahrensanspruchs. Eine Einrichtung und ein Verfahren dieser Art sind aus DE 101 02 771 A1 bekannt. Eine wesentliche Funktion in dieser Einrichtung ist ein Algorithmus, der die Wahrscheinlichkeit einer Kollision des eigenen Fahrzeugs mit einem Zielobjekt erkennen kann und gegebenenfalls eine Vollbremsung beziehungsweise einen Lenkeingriff oder eine Kombination aus beiden einleiten kann.

In dieser Einrichtung werden Ausgangsgrößen bereitgestellt, gespeichert und für Auslesevorgänge bereitgehalten. Bei Vorliegen bestimmter Umfelddaten wird ein aktueller Datensatz in einer nichtflüchtigen Speichervorrichtung gesichert, bis diese über eine Schnittstelle ausgelesen worden sind. Dadurch ist es möglich, zukünftig geplante Steuerungsmöglichkeiten in Fahrzeugen zu testen, ohne unerwartete und unerwünschte Funktionsreaktionen befürchten zu müssen, die in die Fahrzeugdynamik eingreifen. Die künftig vorgesehene Steuerungsmöglichkeiten können Fahrzeugfunktionen sein, die zukünftige Funktionalitäten in Kraftfahrzeugen darstellen.

Durch die bekannte Einrichtung werden Stellgrößen bereitgestellt, die das Auslösen und Durchführen einer automatischen Bremsung beziehungsweise eines automatischen Lenkeingriffes repräsentieren, wobei insbesondere als Bremsung eine Verzögerung vorgesehen ist, die im Bereich der für das jeweilige Fahrzeug maximal möglichen Verzögerung liegt beziehungsweise als Lenkeingriff eine Lenkbewegung der Räder des Kraftfahrzeugs derart vorgesehen ist, dass ein rechtzeitiges Ausweichen vor einem Hindernis ermöglicht wird. Ein derartiges Sicherheitssystern setzt eine aktive Bremseinrichtung voraus, die elektronisch und unabhängig von einer Bremspedalbetätigung angesteuert werden kann beziehungsweise setzt eine elektronisch gesteuerte Lenkung voraus, die unabhängig von einer Lenkradbewegung angesteuert werden kann.

Die bereitgestellten Stellgrößen sind zunächst nicht umsetzbar, daß heißt, sie werden zwar berechnet, führen aber nicht zur Auslösung eines Brems- oder Lenkvorgangs. Auf die Steuereinrichtung kann jedoch von außen ein Aktivierungssignal gegeben werden kann, wodurch die nicht-umsetzbaren Stellgrößen der vorgesehenen Funktion auf Stellglieder ausgegeben werden können und somit zu umsetzbaren Stellsignalen werden. Diese jederzeit durchführbare Aktivierung kann auch jederzeit wieder deaktiviert werden, indem die Steuereinrichtung von außen ein Deaktivierungssignal erhält, das die vorgesehene Funktion derart beeinflußt, dass die umsetzbaren Stellgrößen zu nicht-umsetzbaren Stellgrößen werden.

Die bekannte Einrichtung dient dazu die neuen Steuerungsmöglichkeiten zu testen, bevor sie serienmäßig in die Fahrzeuge eingebaut werden.

Aus der US 5,418,727 ist ein Steuerungsgerät für ein Fahrzeug bekannt, das die Sicherheit eines Fahrzeugs erhöhen soll, wobei Einrichtungen vorgesehen sind, die die Fahrdynamik des Fahrzeugs stabilisieren sollen. Hierzu sind beispielsweise ein Antiblockiersystem, ein Allradlenkungssystem, ein Allradantriebssystem, sowie ein System zur automatischen Abbremsung des Fahrzeugs oder zur automatischen Lenkung des Fahrzeugs vorgesehen. Diese Systeme werden dahingehend überprüft, dass wenn ein Funktionsfehler des Antiblockiersystems, des Allradlenkungssystems oder des Allradantriebs erkannt wird, das Notbremssystem bzw. das automatische Lenksystem abgeschaltet werden. Hierdurch wird erreicht, dass das Fahrzeug trotz einer Fehlfunktion eines Systems nicht in einen instabilen Fahrdynamikzustand gerät.

Vorteile der Erfindung

Die Erfindung mit den in Anspruch 1 und im unabhängigen Verfahrensanspruch angegebenen Merkmalen bietet den Vorteil, daß die neuen Steuerungsmöglichkeiten individuell an der serienmäßig im Fahrzeug eingebauten Einrichtung getestet werden können, so daß bei dem Funktionstest auch Exemplarstreuungen der jeweiligen Steuereinrichtung erfaßt werden können.

In den Unteransprüchen sind zweckmäßige Ausgestaltungen und Weiterbildungen der Erfindung angegeben. Eine vorteilhafte Anwendungsmöglichkeit der Erfindung besteht darin, daß bei Auslieferung des Fahrzeugs, in das die erfindungsgemäße Einrichtung eingebaut ist, zunächst die Ausgabe der Stellgrößen deaktiviert ist, so daß die Einrichtung zunächst in einem Testbetrieb läuft, in dem sie noch nicht auf die Stellelemente des Fahrzeugs, beispielsweise die Bremse oder die Lenkung einwirkt. Erst wenn die Testphase erfolgreich abgeschlossen ist, beispielsweise nach einer vorgegebenen Zeitspanne, einer vorgegebenen Kilometerleistung oder wenn sich aus der Fehlerstatistik mit hinreichender Sicherheit schließen läßt, daß die Einrichtung funktionstüchtig ist, wird die Ausgabe der Stellsignale aktiviert und somit die Funktion im Fahrzeug verfügbar gemacht, ohne daß hierzu ein Werkstatttbesuch oder sonstige Einwirkungen von außen erforderlich sind.

Umgekehrt ist es auch möglich, die Funktion der Einrichtung während der aktiven Phase fortlaufend zu überwachen und die Einrichtung automatisch zu inaktivieren, wenn durch nachträglich aufgetretene Fehler, beispielsweise durch Dejustage eines für die Funktion benötigten Sensors, die Funktionssicherheit der Einrichtung in Frage gestellt wird.

Es ist vorteilhaft, dass der vorgesehenen Funktion, als Teil der Steuereinrichtung, wenigstens eine der Größen

- Abstand zum vorausfahrenden Fahrzeug,
- Relativgeschwindigkeit des vorausfahrenden Fahrzeugs bezüglich des eigenen Fahrzeugs,
- Querversatz des vorausfahrenden Fahrzeugs relativ zum eigenen Fahrzeug,
- Geschwindigkeit des eigenen Fahrzeugs,
- Beschleunigung des eigenen Fahrzeugs,
- Gierrate,
- Beschleunigung des eigenen Fahrzeugs,
- Lenkradwinkel,
- relative Quergeschwindigkeit des vorausfahrenden Fahrzeugs bezüglich des eigenen Fahrzeugs,
- Breite des detektierten Zielobjekts,
- Höhe des detektierten Zielobjekts und
- Fahrbahnreibwert

als Eingangsgröße zugeführt werden kann. Es ist nicht erfindungsmäßig notwendig, dass der Funktion alle aufgeführten Größen zugeführt werden, es kann auch nur eine einzige oder mehrere der aufgeführten Größen oder zusätzliche, nicht genannte Größen der Funktion zugeführt werden.

Vorteilhafterweise werden die Eingangsgrößen der vorgesehenen Funktion von wenigstens einer der Vorrichtungen

- Radarsensor,
- Lidarsensor,
- Videosensor,
- Stereovideosensor,
- Gierratensensor,
- Lenkwinkelsensor oder
- Raddrehzahlsensor

bereitgestellt.

Es ist weiterhin im Sinne der Erfindung vorgesehen, dass einer oder mehrere dieser Sensoren an ein Steuergerät angeschlossen sind und die erfindungsgemäße Funktion Eingangsgrößen von diesem Steuergerät erhält. Beispielsweise kann die Raddrehzahl von einem ABS-Steuergerät oder von einem Steuergerät einer Fahrdynamikregelung der Funktion zugeführt werden.

Weiterhin vorteilhaft ist es, dass die von der Funktion bereitgestellten Größen sowie die dazugehörigen Daten, die maßgeblich für die Bildung dieser Größen sind, sowie weitere Daten, die auf den Zeitpunkt und die Situation der Ausgabe der entsprechenden Stellsignale schließen lassen, in einem nichtflüchtigen Speicher abgelegt werden und dort für Auslesevorgänge bereitgehalten werden.

Vorteilhafterweise handelt es sich bei der Steuereinrichtung, in der die Funktion vorgesehen ist, um eine Vorrichtung zur adaptiven Fahrgeschwindigkeitsregelung.

Die adaptive Fahrgeschwindigkeitsregelung umfaßt vorteilhafterweise eine Stop&Go-Regelung, durch die das fahrgeschwindigkeitsgeregelte Fahrzeug bis in den Stillstand abbremsen und nach erfolgtem Stillstand selbständig oder nach erfolgter Fahrerquittierung wieder anfahren kann, wie es in Warteschlangen vor Verkehrsampeln oder bei Verkehrsstockungen vorkommen kann.

Vorteilhafterweise sind die abgespeicherten Größen sowie die dazugehörigen Daten erst nach dem Auslesen überschreibbar.

Weiterhin ist es vorteilhaft, dass die nicht-flüchtige Speichervorrichtung durch eine Konstruktion vor einer unfallbedingten Zerstörung geschützt wird, so dass ein Auslesen der gespeicherten Daten auch nach einer Kollision und einer damit verbundenen Zerstörung der Einrichtung, in der die erfindungsgemäße Funktion vorgesehen ist, möglich ist.

Weiterhin ist es vorteilhaft, dass als Stellsignal ein Auslösesignal für eine Bremsung oder einen Lenkeingriff ausgegeben wird, wenn die Ungleichung

$$- (d/vr) \leq sqrt(2 \cdot deltayFlucht\ /\ |ay|) \cdot alphai \qquad (1)$$

erfüllt ist, wobei d der Abstand zum vorausfahrenden Fahrzeug, vr die Relativgeschwindigkeit des vorausfahrenden Fahrzeugs in Bezug auf das eigene Fahrzeug, die bei Annäherung der beiden Fahrzeuge negativ ist, deltayFlucht die halbe Breite des eigenen Fahrzeugs abzüglich des minimalen Abstandes des erkannten Zielobjekts zur verlängerten Fahrzeugmittelachse des eigenen Fahrzeugs zuzüglich der halben Objektausdehnung des erkannten Zielobjekts senkrecht zur verlängerten Fahrzeugmittelachse des eigenen Fahrzeugs, ay die mittlere, maximal mögliche Querbeschleunigung des Fahrzeugs bei einem Ausweichmanöver und alphai einen Sicherheitsfaktor kleiner als 1 darstellt.

Weiterhin ist es vorteilhaft, dass die Speicherung der bereitgestellten, nicht Stellgrößen entweder als Datensatz aller Eingangsgrößen bei Auftreten des Auslösesignals erfolgt oder in einem Klassensystem, das die Auftrittshäufigkeit des Auslösesignals in Abhängigkeit verschiedener Sicherheitsfaktoren alphai festhält, oder nur dann erfolgt, wenn

$$- \ (\texttt{vr/d}) \ \cdot \ \texttt{sqrt(2 - deltayFlucht / |ay|)} \ \cdot \ \texttt{alphai} \qquad (2)$$

einen Wert erreicht, der größer ist als der kleinste Wert einer festen Anzahl von bisher erreichten Spitzenwerten.

vorteilhaft ist es auch, dass durch die Auswertung von Eingangsdaten eine Fehlauslösung des Auslösesignals festgestellt werden kann und bei Vorliegen einer festgestellten Fehlauslösung ein weiterer Datensatz gespeichert wird. Eine Fehlauslösung in diesem Sinne ist ein Auslösesignal, das sich aufgrund der Umgebungssituation und des weiteren Fahrverlaufs als unbegründet herausstellt.

Es ist außerdem vorteilhaft, dass die Daten, die in dem nichtflüchtigen Speicher abgelegt werden, verschlüsselt gespeichert werden.

Während der Testphase werden zur Feststellung der Funktionsuntüchtigkeit der Einrichtung in besonders vorteilhafter Weise eines oder mehrere der folgenden Kriterien überprüft:

- Anzahl kurzlebiger Falschziele, die sich nicht plausibel in den Detektionsbereich der Abstandssensoren hinein oder aus diesen hinaus bewegt haben,

- häufige Widersprüche zwischen den Meßergebnissen verschiedener Sensoren, die bei der Bereitstellung der Stellgrößeren ausgewertet werden,

- häufige Falschauslösungen,

- signifikante Anomalien in der Statistik von charakteristischen Größen, anhand derer die Stellsignale berechnet werden. Beispiele für solche Größen sind etwa die berechnete Zeit bis zum Aufprall (vr/d) oder die zum Ausweichen durch ein Lenkmanöver mindestens erforderliche Querbeschleunigung und die zur Verhinderung des Aufpralls durch eine Vollbremsung mindestens erforderliche Längsbeschleunigung amin.In besonders vorteilhafter weise werden die beiden letztgenannten Größen, nachdem sie berechnet sind, mit den dann tatsächlich aufgetretenen Beschleunigungen verglichen. Wenn die tatsächlichen Beschleunigungen kleiner sind als die berechneten charakteristischen Größen und es dennoch nicht zu einem Aufprall kommt, so ist dies ein deutliches Indiz für eine Fehlfunktion des Systems. Diese Größenvergleiche können nicht nur im Auslösungsfall vorgenommen werden, sondern auch dann, wenn die Auslöseschwelle nicht erreicht wird, so daß man eine breitere statistische Basis erhält.

Zeichnungen

Nachfolgend wird ein Ausführungsbeispiel der Erfindung anhand einer Zeichnung erläutert. Es zeigen

Figur 1    ein Blockschaltbild einer bevorzugten Ausführungsform der beanspruchten Steuereinrichtung,

Figur 2    eine Skizze zur Beurteilung der Kollisionswahrscheinlichkeit und

Figur 3    ein Ablaufdiagramm einer möglichen Ausführungsform.

Beschreibung eines Ausführungsbeispiels

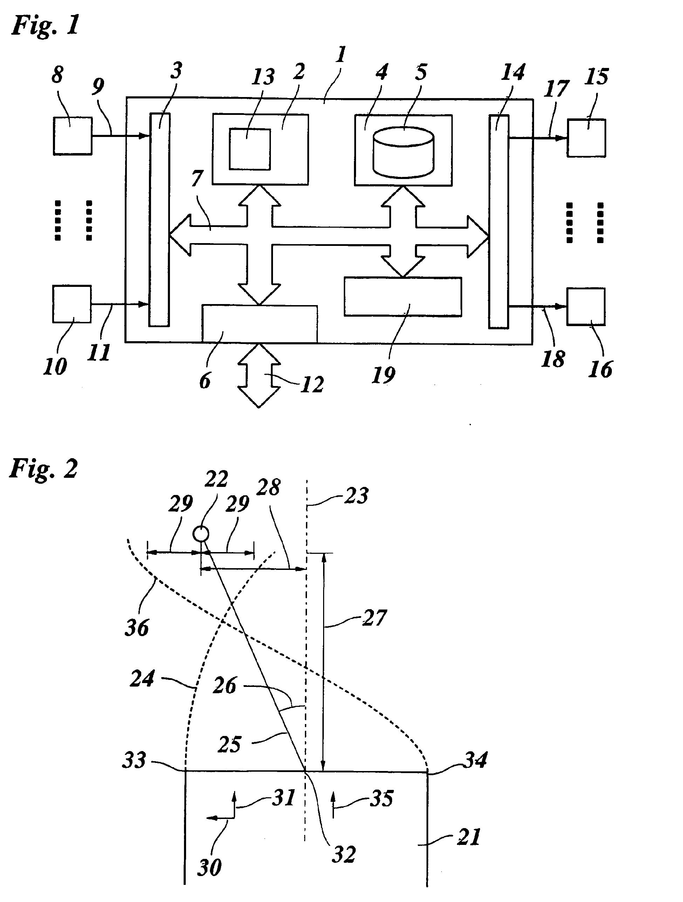

Figur 1 zeigt eine Steuereinrichtung 1, die unter anderem einen Mikroprozessor 2 enthält, in dem unter anderem die vorgesehene Funktion 13 implementiert ist. Weiterhin enthält die Steuereinrichtung 1 eine Eingangsschaltung 3, über die das Steuergerät 1 Eingangsgrößen 9, 11 von mindestens einer Meßwerterfassungseinrichtung 8, 10 erhält. Weiterhin enthält die Steuereinrichtung 1 eine Ausgangsschaltung 14, über die Ausgangsgrößen 17, 18 an ein oder mehrere Stellglieder 15, 16 weitergeleitet werden können. Die Steuereinrichtung 1 umfaßt eine Schnittstelle 6, über die das Steuergerät 1 mit einem externen Diagnosegerät oder Auswertegerät kommunizieren kann. Hierzu ist es notwendig, ein Kommunikationsmedium, vorteilhafterweise ein Schnittstellenkabel 12, das wiederum mit einer externen Diagnose- oder Auswertevorrichtung verbunden ist, mit der Schnittstelle 6 der Steuereinrichtung 1 zu verbinden. Es ist auch denkbar, dass die Schnittstelle, über die die Steuereinrichtung mit einem Diagnoseoder Auswertegerät kommuniziert, nicht wie in Figur 1 dargestellt ausgebildet ist, sondern dass zu Diagnose- und Auswertevorgängen der gleiche CAN-Bus verwendet wird, über den die Steuereinrichtung die Ein- bzw. Ausgangssignale erhält bzw. ausgibt. Des Weiteren enthält die Steuereinrichtung 1 einen nichtflüchtigen Speicher 4, in dem bei Bedarf Datensätze 5 gespeichert werden können und für Auslesevorgänge sowie für die Fehlererkennung bereitgehalten werden können.

Die Steuereinrichtung 1 enthält weiterhin eine integrierte Überwachungseinrichtung 19, die die von der Funktion 13 berechneten Zwischengrößen fortlaufend mit den Eingangsgrößen 9, 11 abgleicht, um etwaige Fehler bei der Erfassung und/oder Auswertung der Eingangsgrößen 9, 11 zu erkennen und eine Fehlerstatistik anzulegen, die im nichtflüchtigen Speicher 4 gespeichert wird und es gestattet, die Fehleranfälligkeit der Funktion 13 zu bewerten.

Die Steuergerätkomponenten Eingangsschaltung 3, Ausgangsschaltung 14, Kommunikationsschnittstelle 6, Mikroprozessor 2 sowie der nichtflüchtige Speicher 4 und die Überwachungseinrichtung 19 sind untereinander mit einem internen Kommunikationssystem 7 verbunden, über das Daten und Informationen in beliebiger Richtung ausgetauscht werden können.

Figur 2 zeigt eine Skizze, mit der die vorgesehene Funktion 13 entscheiden kann, ob der Fahrzeugführer eine drohende Kollision noch rechtzeitig vermeiden kann. Das Inertialsystem 21 des Fahrzeugs hat eine x-Achse 31 parallel zur Längsrichtung des Fahzeugs sowie eine dazu senkrecht y-Achse 30. Das Fahrzeug bewegt sich in Richtung der x-Achse 31 mit der Relativgeschwindigkeit vr 35 bezüglich eines erkannten Zielobjektes 22. Die Meßwerterfassungseinrichtung 8, 10 zur Bereitstellung der Eingangsgrößen 9, 11, im vorliegenden Beispiel handelt es sich hierbei um einen winkelauflösenden Radarsensor, hat in der Entfernung dstrich 25 sowie unter dem Winkel phi 26 das Zielobjekt 22 erkannt. Dieses Zielobjekt kann ein vorausfahrendes Fahrzeug oder aber auch ein stehendes Objekt auf der Fahrbahn sein. Der genannte Radarsensor ist in diesem Beispiel in der Fahrzeuglängsachse 23, also fahrzeugmittig bei 32 angebracht. Diese fahrzeugmittige Position des Radarsensors besitzt nach Definition einen Lateralversatz y = 0. Die linke vordere Fahrzeugecke 33 besitzt in diesem Beispiel einen Lateralversatz von y > 0. Die rechte vordere Fahrzeugecke 34 besitzt einen Lateralversatz von y < 0. Aus den gemessenen relativen Polarkoordinaten dstrich 25 und phi 26 kann nun der Abstand in Längsrichtung d 27 sowie der Lateralversatz ym 28 berechnet werden. Die Breite des Zielobjekts 22, also dessen Ausdehnung senkrecht zur Fahrzeuglängsachse kann entweder durch einen festen Parameter vorgegeben werden für den Fall, dass sich die objektbreite nicht hinreichend fein auflösen läßt, oder aber, bei einer ausreichenden feinen Auflösung des Sensors, durch eine aus den Messwerten berechnete, erkannte Breite berücksichtigt werden. Diese Lateralausdehnung wird im vorliegenden Ausführungsbeispiel durch die Größe deltayobj 29, die die halbe Objektbreite beträgt, verkörpert. Für die weitere Berechnung wird für das erkannte Zielobjekt 22 als laterale Ausdehnung der Bereich zwischen den Werten ym - deltayobj und ym + deltayobj angenommen. Die gestrichelte Linie 24 stellt im vorliegenden Ausführungsbeispiel die Fluchttrajektorie der linken, vorderen Fahrzeugecke 33 dar. Diese Fluchttrajektorie beschreibt eine mögliche Bewegung der Fahrzeugecke 33 in Bezug zum vorausfahrenden Fahrzeug, die sich während eines Ausweichmanövers zur Vermeidung einer Kollision relativ zum Zielobjekt 22 ergibt. Auch in dem Fall, dass das Fahrzeug 21 das vorausfahrende Objekt 22 überholen möchte und dazu aus der Fahrbahn nach links ausschert, ergibt sich eine Fluchttrajektorie, wie es durch die strichpunktierte Linie 36 dargestellt wurde, die jedoch eine unterschiedliche Form aufweist.

Vergleicht man den minimalen Abstand, bei dem ein Ausweichen fahrdynamisch noch möglich ist, mit dem minimalen Abstand bei dem eine kollisionsvermeidende Vollbremsung noch möglich ist, so stellt man fest, dass nur bei kleinen Relativgeschwindigkeiten, der Minimalabstand, bei dem ein Ausweichen möglich ist, größer ist als der Minimalabstand, bei dem eine kollisionsvermeidende Vollbremsung noch möglich ist. Folglich kann nur bei einer kleinen Relativgeschwindigkeit zum vorausfahrenden Fahrzeug eine Kollision durch eine Bremsung vermieden werden, die durch Ausweichen nicht mehr hätte vermieden werden können. Bei größeren Relativgeschwindigkeiten kann jedoch durch eine aktive Vollbremsung die Kollisionsschwere durch die Reduktion der Aufprallenergie verringert werden (Collision Mitigation). Im folgenden wird ein Ansatz beschrieben, der einen Bremseneingriff nahe der maximalen, für das Fahrzeug möglichen Verzögerung vorsieht, wenn ein Ausweichen vor dem vorausfahrenden Fahrzeug nicht mehr möglich ist. Hierzu wird die neue Größe TTC (Time-To-Collision) eingeführt, die den Zeitraum bis zur berechneten Kollision beschreibt. Diese verbleibende Zeit berechnet sich zu

$$TTC = d/(-vr) \qquad\qquad (3).$$

Ist es möglich, innerhalb dieser Zeit mit der Querbeschleunigung ay eine Fluchttrajektorie 24 vorherzusehen, die vor dem Zielobjekt 22 verläuft, so kann noch ein Lenkeingriff zur Kollisionsvermeidung durchgeführt werden. Die Querbeschleunigung ay ist die mittlere, maximal mögliche Querbeschleunigung, die das Fahrzeug mit einem Lenkmanöver erreichen kann. Ist es innerhalb dieser zeit nicht mehr möglich, ein Ausweichmanöver mit der Querbeschleunigung ay nach Art der Fluchttrajektorie 24 durchzuführen, so wird die Auslösung einer Voll-/Notbremsung veranlaßt.

Aus dem Zeit-Beschleunigungs-Gesetz kennt man die Gleichung

$$t = sqrt(2 \cdot |y| / |ay|) \qquad\qquad (4),$$

wobei ay die Querbeschleunigung ist und y den Querweg darstellt, der zum Ausweichen vor der Kollision zurückgelegt werden muß. Dieser Querweg, der vor der Kollision zurückgelegt sein muß, wird im

Weiteren als deltayFlucht bezeichnet. Im vorliegenden Ausführungsbeispiel berechnet sich dieser Querweg deltayFlucht nach Figur 2 aus der halben Fahrzeugbreite yl abzüglich des Lateralversatzes des zielobjektes ym 28 zuzüglich der halben lateralen Objektbreite deltayobj 29. Damit ergibt sich aus Gleichung 4

$$t = sqrt(2 \cdot (yl - |ym| + deltayobj) / |ay|) \qquad (5).$$

Da dieser Querweg vor Ablauf der bis zur Kollision verbleibenden Zeit zurückgelegt sein muß, kann man Gleichung 3 und Gleichung 5 zu folgender Ungleichung zusammenfassen:

$$-(d/vr) \leq sqrt(yl - |ym| + deltayobj) / |ay|) \qquad\qquad (6)$$

Diese Ungleichung wird auch als Auslöseschwelle festgelegt. Solange diese Ungleichung nicht erfüllt ist, hat der Fahrer noch ausreichend Zeit, ein Ausweichmanöver vorzunehmen oder aber er beabsichtigt lediglich ein Überholmanöver. Ist diese Ungleichung, die die Auslöseschwelle darstellt, erfüllt, so droht eine Kollision mit dem vorausfahrenden oder vorausstehenden Objekt und es wird automatisch eine Not oder Vollbremsung eingeleitet. Die Ungleichung, die die Auslöseschwelle beschreibt, kann zusätzlich noch durch einen Sicherheitsfaktor alphai erweitert werden, wodurch sich

$$-(d/vr) \leq sqrt(yl - |ym| + deltayobj) / |ay|) \cdot alphai \qquad (7)$$

ergibt. Durch die Wahl alphai < 1 läßt sich vorteilhafterweise in die Entscheidung der Ungleichung eine Reserve einplanen. Die Entscheidung, ob nur ein Lenkeingriff oder nur ein Bremseneingriff oder eine Kombination aus Lenkund Bremseneingriff durchgeführt werden soll, kann vorteilhafterweise mittels der gleichen Bedingungsungleichung entschieden werden, indem für jede Auslösung unterschiedliche Sicherheitsfaktoren alphai verwendet werden. Hierfür ist es notwendig, dass die jeweilige Art des Eingriffs vorher aktiviert wurde.

Wird eine der mehreren möglichen Auslöseschwellen überschritten, so sieht ein erstes Speicherkonzept vor, dass die zu diesem Zeitpunkt für die Interpretation der Umgebungssituation relevanten Daten im nichtflüchtigen Speicher 4 als Datensatz 5 abgespeichert werden. Dieses Speicherkonzept hat den Vorteil, dass nach einer erfolgten Kollision der Unfallhergang nachkonstruiert werden kann. Ein weiteres Speicherkonzept sieht vor, dass in der Funktion 13 mehrere Auslöseschwellen vorgesehen sind, die sich vorteilhafterweise durch unterschiedliche Sicherheitsfaktoren alphai unterscheiden. In diesem Fall wird im nichtflüchtigen Speicher 4 die Auslösehäufigkeit in Abhängigkeit der verschiedenen Auslöseschwellen und damit der verschiedenen Sicherheitsfaktoren alpha abgespeichert. Dieses Speicherkonzept hat den Vorteil, dass nur sehr wenig Speicherkapazität notwendig ist. Weiterhin ist es durch dieses Konzept möglich, einen geeigneten Sicherheitsfaktor alphai empirisch zu ermitteln. Steht genügend Speicherplatz zur Verfügung, so kann in ähnlicher weise wie im ersten Speicherkonzept für jede oder eine maximale Anzahl von Auslösungen jeweils ein Datensatz mit für die Interpretation der Umgebungssituation relevanten Daten im nichtflüchtigen Speicher 4 abgespeichert werden.

Vorteilhafterweise bekommen die Auslösungen Priorität bei der Speicherzuordnung, die einer unempfindlichen Schwelle entsprechen, z.B. bei kleineren alphai. So wird im Fall dass der Speicherplatz für weitere Auslösungsdatensätze nicht mehr reicht, ein vorher gespeicherter Datensatz gelöscht, wenn diese Auslösung mit einer empfindlicheren Schwelle ausgelöst wurde.

Ein drittes Speicherkonzept sieht vor, dass die beiden Ausdrücke links und rechts des Ungleichheitszeichens der Auslöseungleichung (Gl. 7) einzeln ermittelt werden und eine festgelegte Anzahl von bisher erreichten Spitzenwerten gespeichert wird. Liegt der momentan ermittelte Wert über dem kleinsten bisher gespeicherten Spitzenwert, so wird der momentane Wert neu aufgenommen und der bisher kleinste gespeicherte Spitzenwert gelöscht. Bei diesem Speicherkonzept ist es vorteilhaft, dass man mit einer sehr kleinen Speicherkapazität auskommt.

Das Auslesen des Datensatzes 5 aus dem nichtflüchtigen Speicher 4 kann auf verschiedene Arten erfolgen. So ist es möglich, dass während der Regelinspektion der Datensatz 5 über das interne Kommunikationssystem 7 und die Schnittstelle 6 auf ein externes Gerät übertragen werden kann. Weiterhin ist es möglich, nach einem erfolgten Unfall den Datensatz 5 aus dem nichtflüchtigen Speicher 4 auf gleiche Weise über das interne Kommunikationssystem 7 und die Schnittstelle 6 auszulesen. Weiterhin ist es möglich, das Auslesen des Datensatzes 5 aus der Steuereinrichtung 1 auf freiwilliger Basis durchzuführen. Nach erfolgtem Auslesen des Datensatzes 5 aus dem Speicher 4 ist es sowohl möglich, die bisher angefallenen Daten zu löschen oder aber die bisher angefallenen Daten weiterhin im Speicher zu belassen und im weiteren Fahrtverlauf zu vervollständigen.

Die oben beschriebenen Speicherkonzepte dienen in erster Linie dazu, nach einer erfolgten Kollision den Unfallhergang zu rekonstruieren, und sie ermöglichen es darüber hinaus dem befugten Personal, das Steuergerät 1 und die zugehörige Meßwerterfassungseinrichtung 8, 10 einer Fehlerdiagnose zu unterziehen.

Die Überwachungseinrichtung 19 ist dazu ausgebildet, während des Betriebs des Steuergerätes 1 automatisch eine Fehlererkennung vorzunehmen und eine Fehlerstatistik zu führen. Zu diesem Zweck können in dem nichtflüchtigen Speicher 4 oder wahlweise in einem zusätzlichen flüchtigen Speicher innerhalb der Überwachungseinrichtung 19 zumindest temporär auch zusätzliche Daten gespeichert werden, beispielsweise die Historie der Eingangsgrößen 9, 11 während eines Zeitintervalls vorbestimmter Länge unmittelbar vor dem gegenwärtigen Zeitpunkt.

In der Überwachungseinrichtung 19 kann zum Zweck der Fehlererkennung z.B. überprüft werden, ob die Eingangsgrößen 9, 11 Falschziele repräsentieren, d.h., kurzfristig auftretende scheinbare Zielobjekte, deren Auftreten und Verschwinden plausibel im Sinne eines physikalisch möglichen Verkehrsgeschehens interpretiert werden kann. Die Gesamtzahl solcher Falschzielerkennungen und/oder ihre Häufigkeit pro Zeiteinheit oder pro gefahrene Kilometer wird für eine Fehlerstatistik gespeichert. Bei dieser Fehlerstatistik kann auch unterschieden werden, ob das Fahrzeug 21 während der Falschzielerfassung eine hohe oder niedrige Geschwindigkeit hatte. Bei Fahrten mit niedriger Geschwindigkeit, etwa im Stadtverkehr, ist eine größere statistische Häufigkeit solcher Falschzielerfassungen zu erwarten als bei Fahrten mit höherer Geschwindigkeit auf Schnellstraßen. Die so erstellte Fehlerstatistik kann dann mit gespeicherten Standardstatistiken verglichen werden, die einem voll funktionstauglichen System entsprechen, und wenn die gemessene Fehlerstatistik signifikant von den Standardstatistiken abweicht, wird dies als ein Fehler in der Steuereinrichtung 1 oder der zugehörigen Sensorik interpretiert.

Darüber hinaus ist es zweckmäßig, wenn die Überwachungseinrichtung 19 etwaige Widersprüche zwischen Meßwerten registriert, die aus den Signalen mehrerer Sensoren abgeleitet werden. Wenn z.B. die Meßwerterfassungseinrichtung 8, 10 mehrere Abstandssensoren umfaßt, deren Ortungsbereiche einander überlappen, so sollten die von den mehreren Sensoren für dasselbe Objekt gemessenen Abstände innerhalb der Fehlertoleranz übereinstimmen. Wenn dies nicht der Fall ist, deutet dies ebenfalls auf einen Fehler im System hin. Auch für Widersprüche dieser Art kann eine Fehlerstatistik erstellt werden.

Besonders aussagekräftig für die Funktionstauglichkeit des Systems sind Situationen, in denen die Funktion 13 eine Auslösebedingung festgestellt hat, es dann aber tatsächlich nicht zu einer Kollision gekommen ist. Die Häufigkeit solcher Fehlauslösungen wird ebenfalls gespeichert und statistisch ausgewertet, vorzugsweise unter Speicherung der näheren Umstände (Eingangsgrößen) die zu der Fehlauslösung geführt haben.

In einer besonders vorteilhaften Ausführungsform berechnet die Funktion 13 immer dann, wenn ein Zielobjekt georted wird, fortlaufend die Längsbeschleunigung a und die Querbeschleunigung ay des Fahrzeugs, die zur Kollisionsvermeidung notwendig ist. Diese Größen lassen sich dann im nachhinein mit den tatsächlich aufgetretenen und durch die Eingangssignale repräsentierten Beschleunigungen vergleichen. Diese Vergleiche können auch dann vorgenommen werden, wenn die Auslöseschwelle nicht erreicht wird. Die Häufigkeit und das Ausmaß der Abweichungen zwischen den berechneten Beschleunigungen und den dann tatsächlich eingetretenen Beschleunigungen ermöglicht auf breiter statistischer Basis eine sehr zuverlässige Bewertung der Funktionstauglichkeit des Systems. In einer weiteren Ausbaustufe können dabei auch Situationen berücksichtigt werden, bei denen die Kollision durch eine Kombination aus Brems- und Ausweichmanöver vermieden wird.

Die Überwachungseinrichtung 19 ist weiter dazu ausgebildet, anhand der oben beschriebenen Bewertung der Funktionstauglichkeit des Systems die Ausgangsschaltung 14 zu aktivieren und zu deaktivieren, so daß die von der Funktion 13 im Auslösungsfall bereitgestellten Stellgrößeren entweder an die Stellglieder 15, 16 weitergeleitet werden oder nicht.

In einer besonders vorteilhaften Ausführungsform ist in der Überwachungseinrichtung 19 eine Testphase einprogrammiert, die wahlweise einer bestimmten Betriebszeit des Fahrzeugs (z.B. 500 Stunden) oder einer bestimmten Kilometerleistung (z.B. 5000 km) entspricht oder deren Länge dynamisch in Abhängigkeit von der Fehlerhäufigkeit bestimmt wird. Bei Auslieferung des Fahrzeugs bzw. bei Einbau des Steuergerätes 1 wird die Ausgangsschaltung 14 deaktiviert und die Testphase gestartet. Wenn die Bewertung der Fehlerhäufigkeit bei Ablauf der Testphase ergibt, daß das System ausreichend funktionstauglich ist, wird die Ausgangsschaltung 14 automatisch aktiviert, so daß dann die Funktion 13 für das Fahrzeug zur Verfügung steht. Vorzugsweise bleibt die Überwachungseinrichtung 19 auch nach Ablauf der Testphase im Betrieb, um eine Eigendiagnose des Steuergerätes und der Sensorik vorzunehmen. Wenn sich zeigt, daß die Fehlerhäufigkeit im Sinne der obigen Kriterien signifikant zunimmt, etwa infolge von Defekten oder Alterung der Hardware, wird die Ausgangsschaltung 14 automatisch wieder deaktiviert, und es wird ein Fehlersignal ausgegeben, das den Fahrer auf die Notwendigkeit eines Werkstattbesuches hinweist.

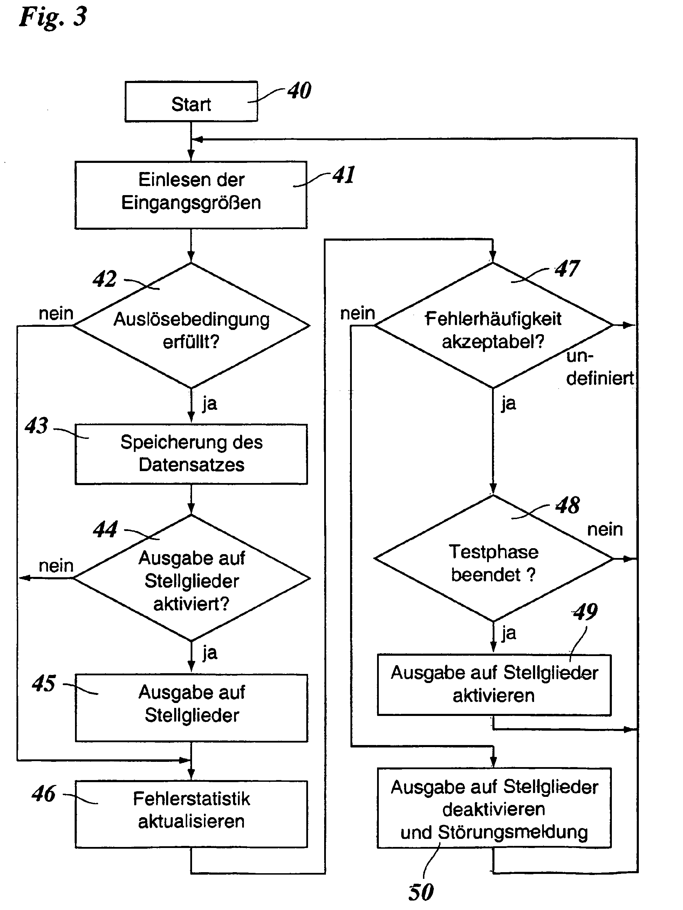

In Figur 3 ist ein Ablaufdiagramm einer möglichen Ausführungsform dargestellt. Nach erfolgtem Start des Algorithmus (Block 40), in dessen Umfang ein Selbsttest sowie eine Initialisierung vorgesehen ist, erfolgt ein erstmaliges Einlesen von Eingangsgrößen in Schritt 41. Im nachfolgenden Schritt 42 wird geprüft (z.B. anhand der Gleichung 7), ob die Auslösebedingung für eine Notbremsung erfüllt ist. Die in Schritt 41 eingelesenen Eingangsgrößen und die in Schritt 42 berechneten Zwischengrößen werden für die Zwecke der Fehlererkennung temporär gespeichert. Wenn sich in Schritt 42 ergibt, daß die Auslösebedingung erfüllt ist, so wird in Schritt 43 der Datensatz, d.h., der Satz der in Schritt 41 eingelegenen Eingangsgrößen, im nichtflüchtigen Speicher 4 gespeichert. Anschließend wird in Schritt 44 geprüft, ob die Ausgangsschaltung 14 aktiviert ist. Wenn dies der Fall ist (nach Ablauf der Testphase) erfolgt in Schritt 45 die Ausgabe der Stellsignale auf die Stellglieder 15, 16.

Wenn die Überprüfung in Schritt 42 ergeben hat, daß die Auslösebedingung nicht erfüllt ist, werden die Schritte 43, 44 und 45 übersprungen. In Schritt 46 wird dann unabhängig davon, ob die Auslösebedingung erfüllt war oder nicht, die Fehlerstatistik in der Überwachungseinrichtung 19 aktualisiert. In Schritt 47 prüft die Überwachungseinrichtung, ob die Fehlerhäufigkeit akzeptabel ist. Wenn die statistische Basis für eine zuverlässige Bewertung der Funktionstauglichkeit noch nicht ausreichend ist, hat diese Überprüfung das Ergebnis "undefiniert". In diesem Fall erfolgt ein Rücksprung zu Schritt 41, und die oben beschriebenen Schritte werden zyklisch wiederholt.

Wenn in Schritt 47 positiv festgestellt wird, daß die Fehlerhäufigkeit akzeptabel ist, wird in Schritt 48 geprüft, ob die Bedingungen für die Beendigung der Testphase erfüllt sind, d.h., ob die programmierte Betriebsdauer oder Kilometerleistung erreicht ist. Wenn dies nicht der Fall ist, erfolgt ein Rücksprung zu Schritt 41 und die oben beschriebenen Schritte werden zyklisch wiederholt. Wenn die Testphase beendet ist, verzweigt der Algorithmus nach Schritt 48 zu Schritt 49, und die Überwachungseinrichtung 19 aktiviert die Ausgabeschaltung 14. Danach erfolgt wieder ein Rücksprung zu Schritt 41, und die Schritte werden zyklisch wiederholt, wobei nun, wenn die Auslösebedingung in Schritt 42 erfüllt ist, der Schritt 45 durchlaufen und eine Notbremsung ausgelöst wird.

Wenn die Überprüfung in Schritt 47 ergibt, daß die Fehlerhäufigkeit nicht akzeptabel ist, so verzweigt der Algorithmus von Schritt 47 nach Schritt 50, und die Ausgabeschaltung 14 wird deaktiviert, sofern sie vorher aktiviert war. Außerdem wird in in diesem Schritt eine Störungsmeldung ausgegeben, damit der festgestellte Fehler behoben werden kann. In der Testphase hat der Schritt 50 lediglich den Effekt, daß die Störungsmeldung ausgegeben wird.

Bei einem durch die Störungsmeldung veranlaßten Werkstattbesuch wird dann anhand der im nichtflüchtigen Speicher 4 gespeicherten Datensätze die Ursache des Fehlers analysiert, und der Fehler wird behoben. Danach wird die Testphase erneut gestartet.

Auch im Anschluß an den Schritt 50 erfolgt ein Rücksprung zu Schritt 41, so daß während der Zeit bis zum Werkstattbesuch weitere statistische Daten gesammelt werden können, ohne daß dabei eine möglicherweise unnötige Notbremsung ausgelöst wird.

**Patentansprüche**

1. Einrichtung zur Erzeugung von Stellsignalen (17, 18) in einem Kraftfahrzeug (21), abhängig von den Eingangssignalen (9, 11) Abstand und Relativgeschwindigkeit zu einem in Fahrtrichtung sich befindenden Objekt (22), mit einer Funktion (13), die für das jeweilige Fahrzeug Stellgrößen bereitstellt und speichert, wobei die Funktion das Auslösen und Durchführen einer automatischen Bremsung beziehungsweise eines automatischen Lenkeingriffs zur Verhinderung einer Kollision mit dem Objekt (22) repräsentiert, und mit einer aktivierbaren und deaktivierbaren Ausgabeeinrichtung (14) zur Ausgabe von Stellsignalen (17, 18), die den bereitgestellten Stellgrößen entsprechen, an Stellelemente (15, 16) des Fahrzeugs, **dadurch gekennzeichnet dass** die Ausgabeeinrichtung (14) während einem Testbetrieb deaktiviert ist und die bereitgestellten Stellsignale (17, 18) und gegebenenfalls zugehörige Umfeldinformationen gespeichert werden und dass nach Erkennen der Funktionstüchtigkeit der Einrichtung der Testbetrieb beendet wird indem die Ausgabeeinrichtung (14) aktiviert wird und im weiteren Verlauf die Stellsignale (17, 18) an die Stellelemente (15, 16) ausgegeben werden.

**2.** Einrichtung nach Anspruch 1, **dadurch gekennzeichnet, dass** die Funktionstüchtigkeit der Einrichtung erkannt wird, wenn eine vorgegebene Betriebszeit des Fahrzeugs oder eine vorgegebene Kilometerleistung verstrichen ist.

**3.** Einrichtung nach Anspruch 1 oder 2, **dadurch gekennzeichnet, dass** die Funktion (13) als Eingangsgrößen (9, 11) wenigstens eine der Größen

- Abstand zum vorausfahrenden Fahrzeug,
- Relativgeschwindigkeit des vorausfahrenden Fahrzeugs bezüglich des eigenen Fahrzeugs,
- Querversatz des vorausfahrenden Fahrzeugs relativ zum eigenen Fahrzeug,
- Geschwindigkeit des eigenen Fahrzeugs,
- Beschleunigung des eigenen Fahrzeugs,
- Gierrate,
- Querbeschleunigung des eigenen Fahrzeugs,
- Lenkradwinkel,
- relative Quergeschwindigkeit des vorausfahrenden Fahrzeugs bezüglich des eigenen Fahrzeugs,
- Höhe des detektierten Objektes,
- Objektausdehnung in Querrichtung,
- Fahrbahnreibwert

verarbeitet.

**4.** Einrichtung nach Anspruch 1 oder 2, **dadurch gekennzeichnet, dass** die Eingangsgrößen (9, 11) von wenigstens einer der Vorrichtungen

- Radarsensor,
- Lidarsensor,
- Videosensor,
- Multivideosensor,
- Gierratensensor,
- Lenkwinkelsensor oder
- Raddrehzahlsensor

bereitgestellt werden.

**5.** Einrichtung nach einem der Ansprüche 2 bis 4, **dadurch gekennzeichnet, daß** die Überwachungseinrichtung (19) bei der Fehlererkennung wenigstens eines der folgenden Kriterien auswertet;

- Häufigkeit der Erkennung von Falschobjekten als Hindernis,
- Häufigkeit von Inkonsistenzen zwischen Eingansgrößen,
- Häufigkeit von Fehlauslösungen.

**6.** Einrichtung nach einem der Ansprüche 2 bis 5, **dadurch gekennzeichnet, daß** die Funktion (13) Grenzwerte für Bewegungsgrößen (ax, ay) des Fahrzeugs berechnet, die zum Ausweichen vor dem Hindernis eingehalten werden müssen, und daß die Überwachungseinrichtung (19) bei der Fehlererkennung diese Grenzwerte mit den tatsächlich beim Ausweichen vor dem Hindernis aufgetretenen Bewegungsgrößen vergleicht.

**7.** Einrichtung nach einem der vorstehenden Ansprüche, **dadurch gekennzeichnet, dass** die bereitgestellten Stellgrößen (5) in einer nichtflüchtigen Speichervorrichtung (4) abgelegt werden und diese abgespeicherten Stellgrößen (5) erst nach dem Auslesen überschreibbar sind.

**8.** Einrichtung nach einem der vorstehenden Ansprüche, **dadurch gekennzeichnet, dass** sie eine Funktion zur adaptiven Fahrgeschwindigkeitsreglung aufweist.

**9.** Verfahren zur Erzeugung von Stellsignalen (16, 17) die das Auslösen und Durchführen einer automatischen Bremsung beziehungsweise eines automatischen Lenkeingriffs repräsentieren, wobei insbesondere als Bremsung eine Verzögerung vorgesehen ist, die im Bereich der für das jeweilige Fahrzeug maximal möglichen Verzögerung liegt beziehungsweise als Lenkeingriff eine Lenkbewegung der Räder des Kraftfahrzeugs derart vorgesehen ist, dass ein rechtzeitiges Ausweichen vor einem Hindernis ermöglicht wird, in einem Kraftfahrzeug, abhängig von den Eingangssignalen (9, 11) Abstand und Relativgeschwindigkeit zu einem in Fahrtrichtung sich befindenden Objekt (22), mit den Schritten:

- Bereitstellen von Stellgrößen für das Fahrzeug,
- Speichern der Stellgrößen zumindest für einen begrenzten Zeitraum,
- Ausgabe von Stellsignalen (16, 17), die den bereitgestellten Stellgrößen entsprechen, an Stellelemente (15, 16) des Fahrzeugs, wenn die Ausgabe von Stellsignalen aktiviert ist, **gekennzeichnet durch** die Schritte:
- Starten einer Testphase, in der die Ausgabe der Stellgrößen deaktiviert ist,
- Bewerten der Zuverlässigkeit des Verfahrens anhand der Fehlererkennung,
- Ausgabe einer Störungsmeldung, wenn die Zuverlässigkeit unzureichend ist,
- Aktivieren der Ausgabe der Stellgrößen, wenn vorgegebene Bedingungen für die Beendigung der Testphase erfüllt sind, einschließlich der Bedingung, daß die Zuverlässigkeit als zureichend bewertet wurde.

**10.** Verfahren nach Anspruch 9, **gekennzeichnet durch** die weiteren Schritte:

- Bewerten der Zuverlässigkeit des Verfahrens anhand der Fehlererkennung, während die Ausgabe der Stellgrößen aktiviert ist,
- Deaktivieren der Ausgabe der Stellgrößen und Ausgabe einer Störungsmeldung, wenn die Zuverlässigkeit unzureichend ist.

## Claims

**1.** Device for producing actuator signals (17, 18) in a motor vehicle (21), as a function of the input signals (9, 11), distance and relative speed with respect to an object (22) located in the direction of travel, having a function (13) which makes available and stores actuator variables for the respective vehicle, the function representing the triggering and execution of an automatic braking operation or of an automatic steering intervention in order to prevent a collision with the object (22), and having an output device (14) which can be activated and deactivated and has the purpose of outputting actuator signals (17, 18), which correspond to the actuator variables which are made available, to actuator elements (15, 16) of the vehicle, **characterized in that** the output device (14) is deactivated during a test mode and the actuator signals (17, 18) which are made available and, if appropriate, associated information about the surroundings are stored, and **in that** after the functional capability of the device has been detected the test mode is terminated by activating the output device (14) and the actuator signals (17, 18) are subsequently output to the actuator elements (15, 16).

**2.** Device according to Claim 1, **characterized in that** the functional capability of the device is detected if a predefined operating time of the vehicle or a predefined kilometre reading is passed.

**3.** Device according to Claim 1 or 2, **characterized in that** the function (13) processes, as input variables (9, 11), at least one of the variables:

- distance from the vehicle travelling in front,
- relative speed of the vehicle travelling in front with respect to the driver's own vehicle,
- lateral offset of the vehicle travelling in front relative to the driver's own vehicle,
- speed of the driver's own vehicle,
- acceleration of the driver's own vehicle,
- yaw rate,
- lateral acceleration of the driver's own vehicle,
- steering wheel angle,
- relative lateral speed of the vehicle travelling in front relative to the driver's own vehicle,
- height of the detected object,
- extent of the object in the lateral direction,
- coefficient of friction of the underlying surface.

**4.** Device according to Claim 1 or 2, **characterized in that** the input variables (9, 11) of at least one of the devices:

- radar sensor,
- lidar sensor,

- video sensor,
- multivideo sensor,
- yaw rate sensor,
- steering angle sensor or
- wheel speed sensor

are made available.

**5.** Device according to one of Claims 2 to 4, **characterized in that**, during the detection of faults, the monitoring device (19) evaluates one of the following criteria:

- frequency of detection of incorrect objects as an obstacle,
- frequency of inconsistencies between input variables,
- frequency of incorrect triggerings.

**6.** Device according to one of Claims 2 to 5, **characterized in that** the function (13) calculates limiting values for movement variables (ax, ay) of the vehicle which have to be complied with in order to carry out an avoidance manoeuvre before the obstacle, and **in that**, during the detection of faults, the monitoring device (19) compares these limiting values with the movement variables which have actually occurred during the avoidance manoeuvre before the obstacle.

**7.** Device according to one of the preceding claims, **characterized in that** the actuator variables (5) which are made available are stored in a nonvolatile memory device (4), and these stored actuator variables (5) cannot be overwritten until after they are read out.

**8.** Device according to one of the preceding claims, **characterized in that** it has a function for adaptive speed control.

**9.** Method for generating actuator signals (16, 17) which represent the triggering and execution of an automatic braking operation or of an automatic steering intervention, in particular a deceleration which is in the range of the maximum possible deceleration for the respective vehicle being provided as a braking operation or a steering movement of the wheels of the motor vehicle being provided as a steering intervention, in such a way that a prompt avoidance manoeuvre before an obstacle is made possible, in a motor vehicle, as a function of the input signals (9, 11), distance and relative speed with respect to an object (22) located in the direction of travel, having the steps:

- actuator variables are provided for the vehicle,
- the actuator variables are stored for at least a limited time period,
- actuator signals (16, 17) which correspond to the actuator variables which are made available are output to actuator elements (15, 16) of the vehicle if the outputting of actuator signals is activated,

**characterized by** the steps:

- a test phase in which the outputting of the actuator variables is deactivated is started,
- the reliability of the method is evaluated by detecting faults,
- a fault message is output if the reliability is insufficient,
- the outputting of the actuator variables is activated if predefined conditions for the termination of the test phase are fulfilled, including the condition that the reliability has been evaluated as sufficient.

**10.** Method according to Claim 9, **characterized by** the further steps:

- the reliability of the method is evaluated by detecting faults while the outputting of the actuator variables is activated,
- the outputting of the actuator variables is deactivated and a fault message is output if the reliability is insufficient.

**Revendications**

**1.** Dispositif de génération de signaux de réglage (17, 18) dans un véhicule automobile (2), en fonction de signaux d'entrée (9, 11) de distance et de vitesse relative par rapport à un objet (22) se trouvant dans la direction de déplacement, avec une fonction (13) qui produit et mémorise des grandeurs de réglage pour le véhicule correspondant, la fonction représentant le déclenchement et l'exécution d'un freinage automatique ou d'une intervention automatique de direction pour empêcher une collision avec l'objet (22), et avec un dispositif d'émission (14) activable et désactivable pour émettre des signaux de réglage (17, 18), qui correspondent aux grandeurs de réglage produites, vers des éléments de réglage (15, 16) du véhicule,
**caractérisé en ce que**
le dispositif d'émission (14) est désactivé pendant un test de fonctionnement et les signaux de réglage produits (17, 18) et éventuellement des informations associées liées à l'environnement sont mémorisés et le test de fonctionnement est terminé après la reconnaissance du bon fonctionnement du dispositif, en activant le dispositif d'émission (14) et en émettant par la suite les signaux de réglage (17, 18) vers les éléments de réglage (15, 16).

2. Dispositif selon la revendication 1,
**caractérisé en ce que**
le bon fonctionnement du dispositif est reconnu lorsqu'un temps de fonctionnement prédéterminé du véhicule est terminé ou qu'un kilométrage prédéterminé a été parcouru.

3. Dispositif selon la revendication 1 ou 2,
**caractérisé en ce que**
la fonction (13) traite comme grandeurs d'entrée (9, 11) au moins une des grandeurs suivantes :

- distance par rapport au véhicule précédent,
- vitesse relative du véhicule précédent par rapport au véhicule propre,
- déport transversal du véhicule précédent par rapport au véhicule propre,
- vitesse du véhicule propre,
- accélération du véhicule propre,
- taux de lacet
- accélération transversale du véhicule propre,
- angle de braquage,
- vitesse transversale relative du véhicule précédent par rapport au véhicule propre,
- hauteur de l'objet détecté,
- extension de l'objet en direction transversale,
- coefficient de friction de la chaussée.

4. Dispositif selon la revendication 1 ou 2,
**caractérisé en ce que**
les grandeurs d'entrée (9, 11) sont générées par au moins un des dispositifs suivants :

- un capteur radar,
- un capteur lidar,
- un capteur vidéo,
- un capteur multividéo,
- un capteur de taux de lacet,
- un capteur d'angle de braquage, ou
- un capteur de vitesse des roues.

5. Dispositif selon l'une quelconque des revendications 2 à 4,
**caractérisé en ce que**
lors d'une reconnaissance de défaut, le dispositif de surveillance (19) évalue au moins un des critères suivants :

- fréquence de reconnaissance de faux objets comme obstacles,
- fréquence des incohérences entre grandeurs d'entrée,
- fréquence des déclenchements intempestifs.

6. Dispositif selon l'une quelconque des revendications 2 à 5,
**caractérisé en ce que**
la fonction (13) calcule pour des grandeurs de mouvement (ax, ay) du véhicule, des valeurs limites à respecter pour éviter l'obstacle, et le dispositif de surveillance (19) compare, lors de cette reconnaissance de défaut, ces valeurs limites avec les grandeurs de mouvement effectivement apparues lors de l'évitement de l'obstacle.

**7.** Dispositif selon l'une quelconque des revendications précédentes,
**caractérisé en ce que**
les grandeurs de réglage générées (5) sont stockées dans un dispositif de mémoire non volatile (4) et ces grandeurs de réglage mémorisées (5) ne peuvent être écrasées qu'après lecture.

**8.** Dispositif selon l'une quelconque des revendications précédentes,
**caractérisé en ce qu'**
il présente une fonction pour la régulation adaptative de la vitesse du véhicule.

**9.** Procédé de génération de signaux de réglage (17, 18) qui représentent le déclenchement et l'exécution d'un freinage automatique ou d'une intervention automatique de direction, dans lequel on prévoit en particulier comme freinage un retard qui se situe dans le domaine du retard maximal possible pour le véhicule correspondant, ou on prévoit comme intervention de direction un mouvement de direction des roues du véhicule automobile de telle manière qu'un obstacle puisse être évité à temps, dans un véhicule automobile en fonction des signaux d'entrée (9, 11) de distance et de vitesse relative par rapport à un objet (22) se trouvant dans la direction de déplacement, comprenant les étapes suivantes :

- production de grandeurs de réglage pour le véhicule,
- mémorisation des grandeurs de réglage au moins pour un laps de temps limité,
- envoi de signaux de réglage (17, 18), qui correspondent aux grandeurs de réglage générées, à des éléments de réglage (15, 16) du véhicule, lorsque l'émission de signaux de réglage est activée,

**caractérisé par** les étapes suivantes :

- démarrage d'une phase de test, pendant laquelle l'émission des grandeurs de réglage est désactivée,
- évaluation de la fiabilité du procédé à l'aide de la reconnaissance de défaut,
- émission d'un message de défaut, lorsque la fiabilité est insuffisante,
- activation de l'émission des grandeurs de réglage, lorsque des conditions prédéterminées pour la fin de la phase de test sont remplies, y compris la condition selon laquelle la fiabilité est jugée suffisante.

**10.** Procédé selon la revendication 9,
**caractérisé par**
les étapes supplémentaires suivantes :

- évaluation de la fiabilité du procédé à l'aide de la reconnaissance de défaut, pendant que l'émission des grandeurs de réglage est activée,
- désactivation de l'émission des grandeurs de réglage et émission d'un message de défaut, lorsque la fiabilité est insuffisante.

## Fig. 1

## Fig. 2

## Fig. 3

```
                    ┌─────────────┐
                    │    Start    │────⟋40
                    └─────────────┘
                           │
                           ▼
                    ┌─────────────┐
                    │ Einlesen der│────⟋41
                    │Eingangsgrößen│
                    └─────────────┘
                           │
         42 ⟍              ▼                              ⟋47
              ◇─────────────────────◇          ◇─────────────────────◇
    nein     ╱  Auslösebedingung    ╲    nein ╱  Fehlerhäufigkeit      ╲    un-
    ◄────────   erfüllt?            ────────── ◄  akzeptabel?          ──────► definiert
              ╲                     ╱          ╲                       ╱
               ◇───────────────────◇            ◇─────────────────────◇
                        │ ja                              │ ja
    43 ⟍               ▼                                  ▼
       ┌─────────────┐                          48 ⟍
       │Speicherung des│                             ◇─────────────────────◇
       │  Datensatzes │                        nein ╱  Testphase            ╲   nein
       └─────────────┘                        ◄──────  beendet ?            ──────►
              │                                      ╲                       ╱
    44 ⟍     ▼                                        ◇─────────────────────◇
         ◇──────────────◇                                      │ ja          49
   nein ╱  Ausgabe auf   ╲                                     ▼              ⟋
   ◄──── Stellglieder    ─                          ┌─────────────────────┐
        ╲ aktiviert?     ╱                          │ Ausgabe auf Stellglieder│
         ◇──────────────◇                           │  aktivieren         │
               │ ja                                 └─────────────────────┘
    45 ⟍      ▼                                               │
       ┌─────────────┐                                        ▼
       │ Ausgabe auf │                          ┌─────────────────────┐
       │ Stellglieder│                          │ Ausgabe auf Stellglieder│
       └─────────────┘                          │   deaktivieren      │
               │                                │ und Störungsmeldung │
    46 ⟍      ▼                                 └─────────────────────┘
       ┌─────────────┐                                    ⟋
       │Fehlerstatistik│                                50
       │ aktualisieren│
       └─────────────┘
```